# EUROPÄISCHE PATENTSCHRIFT

(11) **EP 0 937 603 B1**
(45) Veröffentlichungstag und Bekanntmachung des Hinweises auf die Patenterteilung: **03.07.2002**
(21) Anmeldenummer: 99102108.0
(22) Anmeldetag: 03.02.1999
(51) Int. Cl.: B60N 2/20

(54) **Verriegelungsvorrichtung für eine klappbare Rückenlehne eines Kraftfahrzeugsitzes**
Latching device for a dumpable backrest of an automotive vehicle seat
Dispositif de verrouillage pour un dossier rabattable de véhicule automobile

(30) Priorität: 19.02.1998 DE 19806904
(43) Veröffentlichungstag der Anmeldung: 25.08.1999
(73) Patentinhaber: Faurecia Autositze GmbH & Co. KG, 31655 Stadthagen (DE)
(72) Erfinder: Strasser, Dieter, 31655 Stadthagen (DE)
(74) Vertreter: Seewald, Jürgen, Dipl.-Ing.

(56) Entgegenhaltungen:
- DE-A- 1 505 503
- DE-A- 4 417 491
- DE-A- 19 627 853
- DE-U- 1 770 885
- DE-U- 6 908 021
- FR-A- 2 087 549
- US-A- 3 339 976

## Beschreibung

Die vorliegende Erfindung betrifft eine Verriegelungsvorrichtung für eine klappbare Rückenlehne eines Kraftfahrzeugsitzes gemäß dem Oberbegriff des unabhängigen Anspruchs 1 (siehe z.B. die DE 1 505 503 A).

Bei einem Kraftfahrzeugsitz ist in der Regel die Rückenlehne in ihrer Neigung relativ zu dem Sitzteil einstellbar, um die Rückenlehne unterschiedlichen Körpergrößen und Sitzgewohnheiten optimal anzupassen. Unabhängig von dieser Einstellung der Neigung der Rückenlehne ist diese bei dem hier relevanten Stand der Technik an dem Sitzteil zwischen zwei Endstellungen klappbar gelagert. In einer ersten Einstellung, der sogenannten Gebrauchslage, ist die Rückenlehne nach hinten geschwenkt und dort gegen Umklappen nach vorn arretiert. Nach Lösen einer Verriegelung kann die Rückenlehne von Hand in Fahrtrichtung umgeklappt werden, bis das obere Ende der Rückenlehne etwa am Lenkrad anliegt. Diese Lösung ist insbesondere bei zweitürigen Autos vorteilhaft, um das Einsteigen von Personen in den Fond zu erleichtern.

Die Verriegelungsvorrichtungen für klappbare Rückenlehnen müssen crashsicher sein, um ein ungewolltes Nachvornklappen der Rückenlehnen bei einem Unfall zu vermeiden. Nach dem Stand der Technik werden in aller Regel hakenförmige Klinken zur Verriegelung eingesetzt, wobei grundsätzlich zwischen zwei Lösungsprinzipien zu unterscheiden ist.

Bei der ersten Gruppe von Lösungen sind die Schwenkachsen der Klinken quer zur Fahrtrichtung angeordnet. Als Beispiel sei hier eine Vorrichtung gemäß DE 44 17 491 A1 genannt. Diese und andere Konstruktionen mit quer zur Fahrtrichtung ausgerichteten Schwenkachsen der Klinken haben den Nachteil, daß im Crashfall sehr große Kräfte auf die Klinken wirken, so daß besondere Vorkehrungen getroffen werden müssen, um die Verriegelungslage der Klinken zu sichern.

Eine zweite, nach dem Stand der Technik bekannte Lösungsvariante geht davon aus, die Schwenkachsen der Klinken in Fahrtrichtung anzuordnen. Eine derartige Lösung ist in der DE 196 27 853 A1 offenbart. Aufgrund dieser Ausrichtung der Schwenkachsen der Klinken bleiben diese auch im Crashfall ohne zusätzliche Sicherungen in Verriegelungsstellung. In die letztgenannte Gruppe ist auch der Gegenstand der vorliegenden Erfindung einzuordnen.

Aus DE-Gm 69 08 021 ist ein Fahrzeugsitz mit einer in der Neigung verstellbaren Rückenlehne bekannt. Die Rückenlehne ist an beidseitig am Sitz vorgesehenen sitzteilfesten Seitenarmen schwenkbar gelagert, wobei auf einer Sitzseite ein starr mit dem Rückenlehnenrahmen verbundener Einstellhebel angeordnet ist. Am unteren Ende dieses Einstellhebels sind mehrere Rastbohrungen vorgesehen, die mit einem im benachbarten Seitenarm quer zur Fahrtrichtung geführten Rastbolzen zusammenwirken. Der Rastbolzen ist auf die Rastbohrungen vorgespannt und besitzt einen Griffknauf. Wird der Rastbolzen mittels dieses Griffknaufes aus einer der Rastbohrungen herausgezogen, kann die Rückenlehne in ihrer Neigung verstellt und die gewünschte Neigung durch Einrasten des Rastbolzens in ein entsprechendes Rastloch arretiert werden.

In dem DE-Gm 17 70 885 ist eine ähnliche Vorrichtung zur Neigungsverstellung der Rückenlehne eines Fahrzeugsitzes offenbart. Hier kommt als Rastbolzen ein Schraubbolzen zur Anwendung, der in Arretierstellung mit einem konischen Absatz in jeweils eine von mehreren Rastausnehmungen eingreift. Durch die Kombination Schraubbolzen und Konus ist gewährleistet, daß Abnutzungserscheinungen der Verstellvorrichtung durch einfaches Nachziehen des Schraubbolzens ausgeglichen werden können, um Klappergeräusche zu vermeiden.

Eine gattungsgemäße Verriegelungsvorrichtung ist der o.g. DE 1 505 503 A zu entnehmen. Diese Verriegelungsvorrichtung besitzt einen quer zur Fahrtrichtung verschiebbaren Verriegelungsbolzen, der in einem rückenlehnenfesten Bauteil gelagert ist und in Verriegelungsstellung ein korrespondierendes Loch in einem sitzteilfesten Bauteil spielfrei durchgreift. Diese Verriegelungsvorrichtung ist türbetätigt. Beim Schließen der Tür drückt diese den Bolzen in seine Verriegelungsstellung, während dieser durch den Öffnungsvorgang der Tür unter Federwirkung von der Verriegelung frei kommt.

Eine der oben beschriebenen Lösung sehr ähnliche Konstruktion ist in der US 3,339,976 beschrieben. Hier sind noch zusätzlich elektromagnet- bzw. bowdenzugbetätigte Entriegeluhgsvorrichtungen offenbart.

Aufgabe der vorliegenden Erfindung ist es, eine weitere Verriegelungsvorrichtung der eingangs genannten Art zur Verfügung zu stellen.

Gelöst wird diese Aufgabe durch eine Vorrichtung mit den Merkmalen des Anspruchs 1.

Die erfindungsgemäße Lösung sieht von dem Gebrauch der im Stand der Technik zur Verriegelung verwendeten hakenförmigen Klinken ab, indem ein quer zur Fahrtrichtung verschiebbarer Verriegelungsbolzen vorgeschlagen wird. Mit diesem Verriegelungsbolzen ist auf sehr einfache Weise eine spielfreie und crashsichere Verriegelung des rückenlehnenfesten Bauteils am sitzteilfesten Bauteil realisierbar.

Eine vorteilhafte Ausgestaltung der Erfindung ergibt sich aus dem abhängigen Anspruch.

Die Erfindung wird nachstehend anhand von zwei Ausführungsbeispielen näher erläutert. In der dazugehörigen Zeichnung zeigt:
- Fig. 1: einen perspektivischen Blick auf die zwischen einer klappbaren Rückenlehne und einem Sitzteil eines Kraftfahrzeugsitzes angeordneten Beschlagteile mit einer erfindungsgemäßen Verriegelungsvorrichtung für die klappbare Rückenlehne,
- Fig. 2: einen Längsschnitt durch eine Verriegelungsvorrichtung nach einem ersten Ausführungsbeispiel, und
- Fig. 3: einen Längsschnitt durch eine Verriegelungsvorrichtung nach einem zweiten Ausführungsbeispiel.

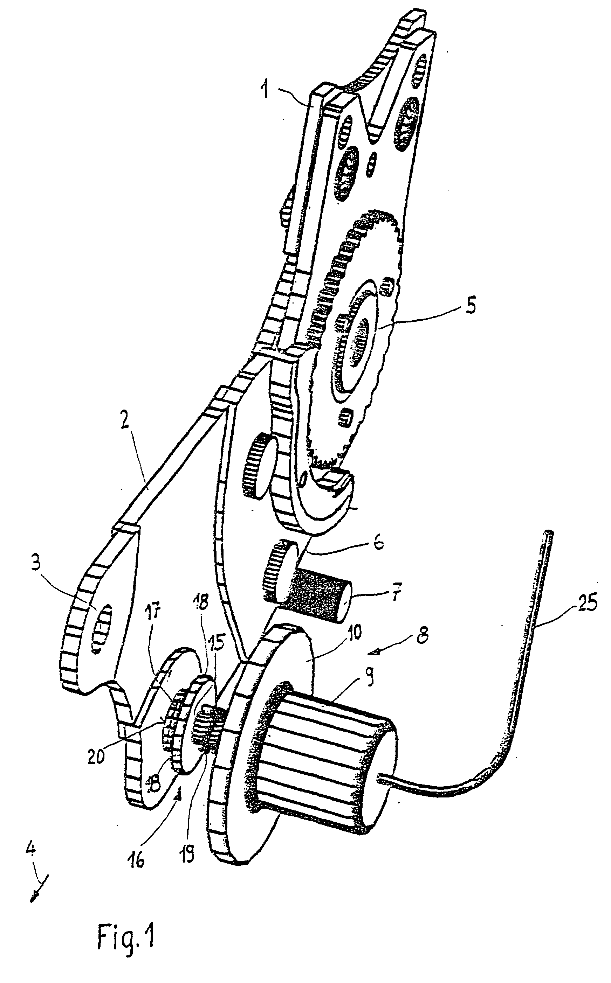

Die Rückenlehne, von der in Fig. 1 lediglich ein geschnittener Bereich eines Seitenholms 1 dargestellt ist, ist auf beiden Sitzseiten über Adapter 2 klappbar am nicht gezeigten Sitzteilrahmen gehaltert. Dazu weisen die Adapter 2 an ihrem vorderen Ende eine Bohrung 3 auf, die die Rückenlehnen-Klappunkte bilden. Diese Bohrungen 3 nehmen sitzteilfeste Bolzen auf, was nicht dargestellt ist. In Fig. 1 ist die Fahrtrichtung durch einen Pfeil 4 angegeben.

Nachfolgende Ausführungen beziehen sich nur auf die baulichen Verhältnisse auf einer der beiden Sitzseiten. Da in dem hier interessierenden Bereich auf beiden Sitzseiten im wesentlichen Baugleichheit vorliegt, gilt das Gesagte entsprechend für die andere Sitzseite.

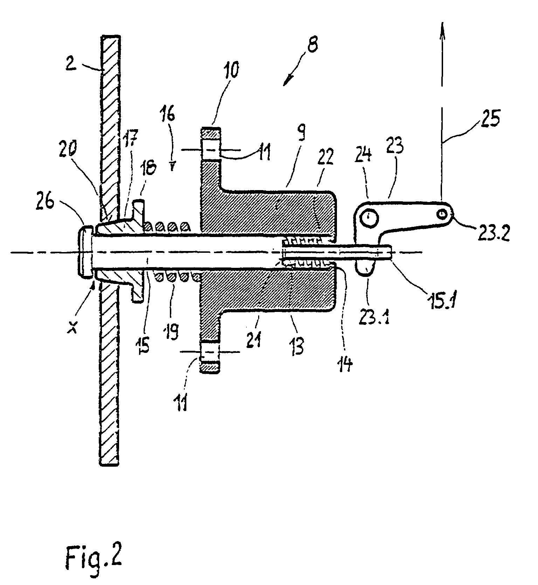

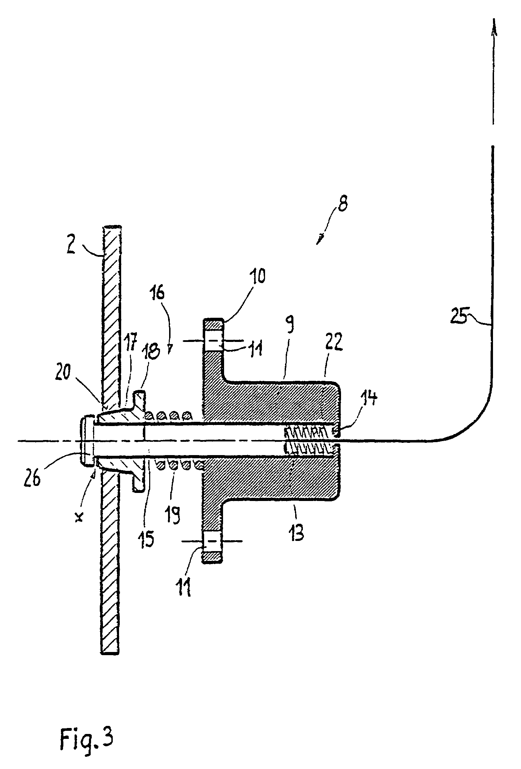

Der Adapter 2 ist über einen Drehversteller 5 mit dem Seitenholm 1 der Rückenlehne verbunden. Dieser Drehversteller 5 ist nach dem Stand der Technik ausgeführt, so daß sich weitere Erörterungen dazu erübrigen. Bei in Gebrauchslage befindlicher Rükkenlehne liegt die Unterseite 6 des Adapters 2 auf einem sitzteilfesten Anschlag 7 auf. Um ein ungewolltes Vorklappen der Rückenlehne, z.B. im Crashfall, zu verhindern, ist eine Verriegelungsvorrichtung 8 vorgesehen, deren Aufbau nachstehend anhand von zwei Ausführungsbeispielen gemäß den Fig. 2 bzw. 3 näher erläutert wird.

Die Verriegelungsvorrichtung 8 gemäß Fig. 2 weist eine Führungsbuchse 9 auf, die an die Innenseite des nicht dargestellten Sitzteilrahmens angeflanscht ist. Dazu ist sie mit einem Flansch 10 und Durchgangsbohrungen 11 für Befestigungsschrauben ausgestattet. Die Führungsbuchse 9 besitzt eine zentrale Durchgangsbohrung 13, die an dem zur Sitzinnenseite weisenden Ende durch einen Bund 14 auf einen kleineren Durchmesser verengt ist. In der Durchgangsbohrung 13 ist der Schaft 15 eines insgesamt mit dem Bezugszeichen 16 versehenen Verriegelungsbolzens quer zur Fahrtrichtung 4 (Fig. 1) geführt. Dieser Verriegelungsbolzen 16 besteht weiterhin aus einer Konusbuchse 17, die auf dem Schaft 15 längsverschiebbar gelagert ist.

Die Konusbuchse 17 besitzt einen Flansch 18. Zwischen diesem Flansch 18 und dem Flansch 10 der Führungsbuchse 9 ist konzentrisch zum Schaft 15 eine Druckfeder 19 eingelegt, die die Konusbuchse 17 auf ein mit dieser korrespondierendes Konusloch 20 im Adapter 2 vorspannt. In Verriegelungsstellung durchgreift die Konusbuchse 17 das Konusloch 20, wobei die beiden Konusflächen für eine spielfreie Anlage sorgen.

Im Ausführungsbeispiel gemäß Fig. 2 ist der Schaft 15 des Verriegelungsbolzens 16 an seinem nach innen weisenden Ende durch einen Absatz 21 auf einen Abschnitt 15.1 geringeren Durchmessers reduziert. Dieser Abschnitt 15.1 durchragt den Bund 14 der Führungsbuchse 9. Zwischen den Absatz 21 und den Bund 14 ist konzentrisch zum Abschnitt 15.1 des Schaftes 15 eine Druckfeder 22 eingelegt, die den Schaft 15 in Richtung auf den Adapter 2 bzw. auf das Konusloch 20 vorspannt.

Die Bewegung des Schaftes 15 nach links (bezogen auf Fig. 2) wird durch einen Winkelhebel 23 begrenzt, dessen einer Schenkel 23.1 in das aus der Führungsbuchse 9 herausragende Ende des Abschnitts 15.1 eingehängt ist. Der Winkelhebel 23 ist an einem sitzteilfesten Bolzen 24 schwenkbar gelagert. In seinen anderen Schenkel 23.2 ist ein zum Lehnen-Klapphebel führendes Zugseil 25 eingehängt. Dieser nicht dargestellte, zum Stand der Technik gehörende Lehnen-Klapphebel liegt in Verriegelungsstellung an einem Anschlag an, wodurch die in Fig. 2 dargestellte Lage des Winkelhebels 23, vermittelt durch das Zugseil 25, fixiert ist - mit anderen Worten, der durch die Druckfeder 22 beaufschlagte Schaft 15 des Verriegelungsbolzens 16 ist daran gehindert, sich weiter nach links zu bewegen.

Aus Fig. 2 geht hervor, daß der Schenkel 23.1 des Winkelhebels 23 kürzer als dessen anderer Schenkel 23.2 ist. Diese "eingebaute" Übersetzung verlängert zwar den Betätigungsweg des Lehnen-Klapphebels, verringert aber in gewünschter Weise seine Betätigungskraft.

Wie aus Fig. 2 weiterhin ersichtlich ist, ist an dem der Konusbuchse 17 zugeordneten Ende des Schaftes 15 ein Kopf 26 ausgebildet, dessen Durchmesser größer als der Innendurchmesser der Konusbuchse 17, aber kleiner als der Kleinstdurchmesser des Konuslochs 20 ist. Zwischen diesem Kopf 26 und der diesem zugewandten Stirnfläche der Konusbuchse 17 ist in Verriegelungsstellung ein Spiel x vorhanden. Dieses Spiel x stellt sicher, daß die Konusbuchse 17 in Verriegelungsstellung spielfrei an der Wandung des Konuslochs 20 anliegt. Es dient somit einem Toleranzausgleich.

Die beschriebene Verriegelungsvorrichtung 8 arbeitet wie folgt:

Zum Klappen der Rückenlehne aus ihrer Gebrauchslage ist der Lehnen-Klapphebel zu ziehen. Dadurch wird der Winkelhebel 23 in Gegen-Uhrzeigerrichtung um seinen Bolzen 24 geschwenkt. Aufgrund dieser Schwenkbewegung bewegt sich sein kurzer Schenkel 23.1, bezogen auf Fig. 2, nach rechts, d.h. der Schaft 15 des Verriegelungsbolzens 16 wird zunächst nur gegen die Kraft der Druckfeder 22 nach rechts gezogen. Dabei gelangt der Kopf 26 nach Überwindung des Spiels x, also nach einem sehr kurzen Hubweg, in Anlage an die Konusbuchse 20, wodurch auf dem weiteren Hubweg des Schaftes 15 nun zusätzlich noch die Kraft der Druckfeder 19 zu überwinden ist. Bei vollständig betätigtem Lehnen-Klapphebel kommt der Verriegelungsbolzen 16 vom Adapter 2 frei, und die Rückenlehne kann nach vorn geklappt werden.

Nach dem Nachvornklappen der Rückenlehne wird der Lehnen-Klapphebel in aller Regel losgelassen. Die Druckfedern 22 und 19 drücken dann den Schaft 15 und damit dessen Kopf 26 gegen die Adapteroberfläche. Beim Zurückklappen der Rückenlehne gleitet der Kopf 26 auf dem Adapter 2, bis er in das Konusloch 20 eintaucht. Die Druckfeder 22 drückt dann den Schaft 15 weiter nach links in die aus Fig. 2 ersichtliche Stellung. Gleichzeitig schiebt die Druckfeder 19 die Konusbuchse 17 auf dem Schaft 15 in Eingriff mit dem Konusloch 20. In diesem Moment liegt der Adapter 2 auch wieder mit seiner Unterseite 6 auf dem sitzteilfesten Anschlag 7 auf. Die Rückenlehne ist nun wieder spielfrei verriegelt.

In Fig. 3 ist eine weitere Ausführungsform einer Verriegelungsvorrichtung 8 dargestellt. Der einzige Unterschied zu der zuvor erläuterten Variante besteht darin, daß das Zugseil 25 direkt an den Schaft 15 des Verriegelungsbolzens 16 angebunden ist. Die Wirkungsweise dieser Verriegelungsvorrichtung 8 ist ansonsten mit der des vorherigen Ausführungsbeispiels identisch, so daß an dieser Stelle eine nochmalige Erläuterung nicht erforderlich ist. Die in Fig. 3 dargestellte Verriegelungsvorrichtung 8 entspricht der von Fig. 1.

## Patentansprüche

1. Verriegelungsvorrichtung für eine klappbare Rückenlehne eines Kraftfahrzeugsitzes, bei der ein sitzteilfestes Bauteil und ein rückenlehnenfestes Bauteil bei in Gebrauchslage befindlicher Rückenlehne quer zur Fahrtrichtung lösbar aneinander verriegelbar sind, wobei zur Verriegelung ein quer zur Fahrtrichtung verschiebbarer Verriegelungsbolzen (16) vorgesehen ist, der im sitzteilfesten Bauteil oder im rükkenlehnenfesten Bauteil gelagert ist und in Verriegelungsstellung ein korrespondierendes Loch (20) im rückenlehnenfesten Bauteil bzw. im sitzteilfesten Bauteil spielfrei durchgreift, **dadurch gekennzeichnet, daß** die Wandung des Loches (20) konisch ist und auf einem Schaft (15) des Verriegelungsbolzens (16) eine Konusbuchse (17) verschiebbar geführt ist, die auf das Ende des Schaftes (15) vorgespannt ist und in Verriegelungsstellung spielfrei in das Loch (20) eingreift, wobei der Schaft (15) an seinem dem Loch (20) zugeordneten Ende mit einem Kopf (26) versehen ist, dessen radiale Abmessungen größer als der Innendurchmesser der Konusbuchse (17), aber kleiner als der Kleinstdurchmesser des Lochs (20) sind, und in Verriegelungsstellung ein Spiel (x) zwischen dem Kopf (26) und dem diesem zugewandten Ende der Konusbuchse (17) vorhanden ist, und wobei der Kopf (26) beim Entriegelungsvorgang als Mitnehmer für die Konusbuchse (17) dient.

2. Verriegelungsvorrichtung nach Anspruch 1, **dadurch gekennzeichnet, daß** der Schaft (15) des Verriegelungsbolzens (16) in Verriegelungsstellung vorgespannt ist und zum Entriegeln mit einem Zugseil (25) in Verbindung steht.

## Claims

1. Locking device for folding back-rest of a car seat, in which a component fixed to the seat and a component fixed to the back-rest may be locked on to one another and disengaged with the back-rest in its position of use at right-angles to the direction of vehicle travel, where in order to lock a locking pin (16) is provided, capable of movement at right-angles to the direction of vehicle travel, which is mounted in the component fixed to the seat or the component fixed to the back-rest and in the locking position passes, without play, through a corresponding hole (20) in the component fixed to the back-rest or the component fixed to the seat, **characterised in that** the wall of the hole (20) is tapered and on a shank of the locking pin (16) a tapered bush (17) is located, capable of sliding, which is compressed on the end of the shank (15) and in the locking position passes, without play, into the hole (20), and in which the shank (15) at its end intended for the hole (20) is fitted with a head (26) whose radial dimensions are greater than the internal diameter of the tapered bush (17), but smaller than the minimum diameter of the hole (20) and in the locking position there is play (x) between the head (26) and the end of the tapered bush (17) turned toward it and in which the head (26) acts as follower [=carrier] for the tapered bush (17) when unlocking takes place.

2. Locking device in accordance with Claim 1, **characterised in that** the shank (15) of the locking pin (16) is tensioned in the locking position and is connected to a pull cable (25) for lock-release.

## Revendications

1. Dispositif de verrouillage pour un dossier articulé d'un siège de véhicule automobile, dont un composant monté fixe sur le siège et un composant monté fixe sur le dossier peuvent être verrouillés l'un sur l'autre, de manière amovible, transversalement à la direction de roulement en position d'utilisation du dossier, un verrou (16) déplaçable transversalement à la direction de roulement étant prévu pour le verrouillage, verrou qui est logé dans le composant monté fixe sur le siège ou dans le composant monté fixe sur le dossier et qui, en position de verrouillage, traverse, sans laisser de jeu, un trou correspondant (20) pratiqué dans le composant fixe du dossier ou dans le composant fixe du siège, **caractérisé en ce que** la paroi du trou (20) est conique et qu'une douille conique (17) est guidée déplaçable sur une tige (15) du verrou (16), douille conique qui est précontrainte sur l'extrémité de la tige (15) et qui, en position de verrouillage, s'avance dans le trou (20) sans laisser de jeu, la tige (15) étant pourvue, à son extrémité tournée vers le trou (20), d'une tête (26) dont les dimensions radiales sont plus importantes que le diamètre intérieur de la douille conique (17), mais plus petites que le plus petit diamètre du trou (20), qu'en position de verrouillage, un jeu (x) existe entre la tête (26) et l'extrémité tournée vers celle-ci de la douille conique, la tête (26) servant, pendant le processus de déverrouillage, d'élément d'entraînement à la douille conique (17).

2. Dispositif de verrouillage suivant la revendication 1, **caractérisé en ce que** la tige (15) du verrou (16) est précontrainte en position de verrouillage et reliée, pour le déverrouillage, à un câble tracteur (25).
